# EUROPÄISCHE PATENTANMELDUNG

(11) **EP 3 176 924 A1**
(43) Veröffentlichungstag der Anmeldung: **07.06.2017**
(21) Anmeldenummer: 15197592.7
(22) Anmeldetag: 02.12.2015
(51) Int. Cl.: H02K 15/04

(54) **VERFAHREN ZUR HERSTELLUNG EINER FORMSPULE**

(71) Anmelder: Siemens Aktiengesellschaft, 80333 München (DE)
(72) Erfinder: Sabelfeld, Ilja, 10119 Berlin (DE); Centner, Matthias, 10555 Berlin (DE); Festa, Marco, 14612 Falkensee (DE)

(57) **Zusammenfassung**

Ein Herstellungsverfahren einer geschlossenen Formspule (3) eines Ständerwicklungssystem (2) einer elektrischen rotierenden Maschine (1) aus einer Rohspule (21) mit einem rechteckigen Spulenquerschnitt (14) mit Nutseiten (4) und Stirnseiten (5), welche mehrere zueinander elektrisch isolierte rechteckige Teilleiter (16) aufweist, mit Hilfe einer Spulenformmaschine (22) wird beschrieben. Die Spulenformmaschine (22) weist Nasenhalter (23), Radiusstücke (24) und Führungselemente (25) auf. Im ersten Schritt werden die Stirnseiten (5) mittig von einem Nasenhalter (23), die Nutseiten (4a, 4b) jeweils von zwei Radiusstücken (24) und die Bereiche zwischen Stirnseiten (5) und Radiusstücken (24) von Führungselementen (25) gehalten. Im darauf folgendem zweiten Schritt werden die beiden Nutseiten (4a, 4b) von den Radiusstücken (24) gespreizt und zueinander verdreht, so dass sie parallel zueinander verlaufen und der geforderten Nutlage entsprechen. Im darauf folgendem dritten Schritt werden die Zwischenbereiche durch die Führungselemente (25), die an drei Seiten kraftschlüssig oder formschlüssig verbunden sind, in eine definierte Endposition gebogen.

## Beschreibung

Die Erfindung betrifft ein Verfahren zur Herstellung einer geschlossenen Formspule für ein Ständerwicklungssystem einer elektrischen rotierenden Maschine aus einer Rohspule mit einem rechteckigen Spulenquerschnitt, welche mehrere zueinander elektrisch isolierte rechteckige Teilleiter aufweist, mit Hilfe einer Spulenformmaschine.

Weiterhin betrifft die Erfindung eine Spulenformmaschine zur Herstellung einer derartigen Formspule.

Ferner betrifft die Erfindung ein Computerprogramm zur Steuerung einer derartigen Spulenformmaschine.

Überdies betrifft die Erfindung eine elektrische rotierende Maschine mit mindestens einer gemäß einem derartigen Verfahren hergestellten geschlossenen Formspule.

Ein derartiges Verfahren wird insbesondere im Bereich der elektrischen Großmaschinen eingesetzt, bei denen Ständerwicklungssysteme bevorzugt als gesehnte Zweischichtwicklungen ausgeführt werden. Unter elektrischen Großmaschinen versteht man beispielsweise große Motoren und Generatoren mit einer Leistung von mindestens zehn Megawatt.

Formspulen gesehnter Zweischichtwicklungen werden bevorzugt so ausgelegt, dass möglichst kurze elektrische Leiterlängen erzielt werden und die Minimalabstände zwischen benachbarten Spulen eines Ständerwicklungssystems eingehalten werden.

Bei einer Zweischichtwicklung befinden sich zwei Schenkel von zwei verschiedenen Spulen übereinander in einer Nut, wobei der in der Hälfte zur Nutöffnung liegende Schenkel als Oberschicht und der in der Hälfte zum Nutgrund liegende Schenkel als Unterschicht genannt wird. Um möglichst kurze Leiterlängen zu erzielen und die Minimalabstände zwischen benachbarten Spulen eines Ständerwicklungssystems einzuhalten, müssen die Abstände der Oberschicht und Unterschicht am axial inneren Kreuzungspunkt minimal sein und die Abstände der benachbarten Spulenstirnseiten minimal sein. Der Abstand benachbarter Spulenstirnseiten wird Stirnseitenabstand genannt, wobei der geforderte minimale Stirnseitenabstand von der maximal auftretenden Potentialdifferenz zwischen den benachbarten Spulenstirnseiten abhängt, um ein Überkoppeln zu vermeiden. Je größer der erforderliche Stirnseitenabstand ist, desto größer ist die Wickelkopfausladung, also die axiale Länge des Teils der Spule, der sich nicht in den Nuten des Blechpaktes befindet. Toleranzen in der Geometrie der Formspulen machen einen größeren Stirnseitenabstand erforderlich, so dass sich die Wickelkopfausladung vergrößert und damit die axiale Länge der Formspule für das Ständerwicklungssystem steigt.

Um die geforderten Abstände zu erreichen, müssen diese durch meist händisches Nacharbeiten erzeugt werden. Dazu werden alle Formspulen des Ständerwicklungssystems in die Nuten des Blechpakets eingelegt, wobei im eingelegten Zustand die Stirnseiten manuell zurechtgebogen werden. Dieses Nachbearbeitungsverfahren ist teuer und zeitaufwendig.

Der Erfindung liegt die Aufgabe zugrunde, ein Verfahren der eingangs genannten Art anzugeben, welches eine kostengünstige und zeitsparende Fertigung mit hohem Automatisierungsgrad ermöglicht.

Diese Aufgabe wird durch ein Verfahren der eingangs genannten Art gelöst, wobei die Spulenformmaschine Nasenhalter, Radiusstücke und Führungselemente aufweist, wobei die Rohspule Nutseiten und Stirnseiten aufweist, wobei in einem ersten Schritt die Stirnseiten jeweils von einem Nasenhalter näherungsweise mittig gehalten werden, die Nutseiten auf der gesamten Blechpaketlänge jeweils von mindestens zwei Radiusstücken gehalten werden und die Bereiche der Stirnseiten der Rohspule zwischen den Nasenhaltern und den Radiusstücken von Führungselementen gehalten werden, wobei in einem weiteren Schritt die beiden Nutseiten von den Radiusstücken derartig gespreizt und zueinander verdreht werden, dass die der späteren Nutlage entsprechende Winkelstellung der Nutseiten zueinander hergestellt wird und die Nutseiten parallel zueinander in axiale Richtung verlaufen, wobei in einem darauf folgenden Schritt die Stirnseiten durch die Führungselemente, welche mit der im weiteren Schritt entstandenen Formspule zumindest an drei Seiten kraftschlüssig und/oder formschlüssig verbunden werden, auf einem vorgegebenen Weg in eine definierte Endposition gebogen werden.

Mit Hilfe der Führungselemente erfolgt demnach eine aktive Stirnseitenführung, was bevorzugt zu einer definierten und reproduzierbaren Form der Stirnseiten führt. Eine variable Anzahl von Führungselementen, beispielsweise jeweils drei zwischen einem Nasenhalter und einem Radiusstück auf jeder der Stirnseiten, führt beispielsweise eine Biegung im Bereich der Stirnseiten aus, um die gewünschte Form zu erreichen. Da die Spulenstirnseiten bevorzugt entlang einer Idealform geführt werden können, kann so bei gegebenen Minimalabständen die Leiterlänge reduziert werden, was Material einspart und die Maschine kompakter macht. Durch eine derartige aktive Stirnseitenführung wird eine reproduzierbare und automatisierte Fertigung der Formspulen für das Ständerwicklungssystem einer elektrischen rotierenden Großmaschine erreicht. Ein Nacharbeiten ist, wenn überhaupt, nur noch in einem sehr geringen Maße erforderlich, um einen definierten Stirnseitenabstand zu erreichen, was Fertigungsaufwand und Kosten einspart.

Die Führungselemente sind mit der Formspule zumindest an drei Seiten kraftschlüssig und/oder formschlüssig verbunden. Kraftschlüssige Verbindungen entstehen durch die Übertragung von Kräften. Dazu zählen beispielsweise Druckkräfte oder Reibungskräfte. Der Zusammenhalt der kraftschlüssigen Verbindung wird rein durch die wirkende Kraft gewährleistet. Formschlüssige Verbindungen hingegen entstehen durch das Ineinandergreifen von mindesten zwei Verbindungspartnern. Durch die mechanische Verbindung können sich die Verbindungspartner auch ohne oder bei unterbrochener Kraftübertragung nicht lösen. Durch eine derartige kraftschlüssige und/oder formschlüssige mechanische Verbindung der Führungselemente mit den Stirnseiten der Formspule wird die Rechteckform des Spulenquerschnitts auch im Bereich der Stirnseiten zu erhalten. Damit wird vermieden, dass es zu Lufteinschlüssen zwischen der Formspule und ihrer Isolierung kommt, welche durch eine Treppenbildung der Teilleiter aufgrund der Biegung an den Stirnseiten entstehen kann. Weiterhin kann durch die Erhaltung der Rechteckform des Spulenquerschnitts in Bereich der Stirnseiten ein optimierter Stirnseitenabstand erzielt werden.

Weiterhin wird die Aufgabe durch eine Spulenformmaschine zur Herstellung einer Formspule für ein Ständerwicklungssystem für eine elektrische rotierende Maschine nach einem derartigen Verfahren gelöst, wobei die Spulenformmaschine Nasenhalter, Radiusstücke und Führungselemente aufweist, wobei die Nasenhalter zum Fixieren der Stirnseiten einer Rohspule vorgesehen sind, wobei die Radiusstücke zum Fixieren der Nutseiten der Rohspule vorgesehen sind, wobei die Führungselemente zum Fixieren der Bereiche der Stirnseiten der Rohspule zwischen den Nasenhaltern und den Radiusstücken vorgesehen sind und wobei die Führungselemente dafür vorgesehen sind, mit der Formspule zumindest an drei Seiten kraftschlüssig und/oder formschlüssig verbunden zu werden.

Durch die kraft- und/oder formschlüssige mechanische Verbindung der Führungselemente mit den Stirnseiten der Formspule wird die Rechteckform des Spulenquerschnitts auch im Bereich der Stirnseiten erhalten. Damit wird vermieden, dass es zu einer Treppenbildung der Teilleiter aufgrund der Biegung an den Stirnseiten kommt. Lufteinschlüssen zwischen der Formspule und ihrer Isolierung werden so verhindert. Weiterhin kann durch die Erhaltung der Rechteckform des Spulenquerschnitts in Bereich der Stirnseiten ein optimierter Stirnseitenabstand erzielt werden. Ferner wird durch eine derartige Spulenformmaschine mit aktiver Stirnseitenführung eine reproduzierbare und automatisierte Fertigung der Formspulen für das Ständerwicklungssystem einer elektrischen rotierenden Großmaschine erreicht. Manuelles Nacharbeiten ist, wenn überhaupt, nur noch in einem sehr geringen Maße erforderlich, um einen definierten Stirnseitenabstand zu erreichen, was Fertigungsaufwand und Kosten einspart.

Ferner wird die Aufgabe durch ein Computerprogramm zur Durchführung eines derartigen Verfahrens bei Ablauf in einer Steuerung gelöst.

Mit einem derartigen Computerprogramm kann beispielsweise die Formspule unter anderem anhand von CAD Daten automatisiert aus der Rohspule gebogen werden, wobei beispielsweise die Nasenhalter, Radiusstücke und Führungselemente derartig vom Computerprogramm gesteuert werden, dass die Formspule eine nahezu identische Form wie beispielsweise das zugehörige CAD-Modell aufweist. Eine derartige Steuerung mit Hilfe eines Computerprogramms liefert direkt ein sehr genaues und reproduzierbares Fertigungsergebnis, wodurch ein insbesondere händisches Nacharbeiten nicht mehr oder nur noch in einem sehr geringen Maße erforderlich ist. Weiterhin trägt eine derartige automatisierte Spulenfertigung zur Qualitätssicherung bei.

Überdies wird die Aufgabe durch eine elektrische rotierende Maschine mit mindestens einer gemäß einem derartigen Verfahren hergestellten geschlossenen Formspule gelöst.

Eine derartige elektrische rotierende Maschine ist durch die Automatisierung optimierten Stirnseitenabstände kompakter. Fertigungsaufwand und Kosten werden einspart.

Auf besonders vorteilhafte Weise werden die Nasenhalter im weiteren Schritt in axiale Richtung passiv nachgeführt. Während die beiden Nutseiten von den Radiusstücken gespreizt und zueinander verdreht werden bewegen sich die Nasenhalter, welche die Stirnseiten näherungsweise mittig fixieren, in axiale Richtung aufeinander zu. Dadurch wird gewährleistet, dass sich die Spule nicht ungleichmäßig und unkontrolliert verbiegt sondern die erforderliche Form erreicht wird.

Bevorzugt wird als Rohspule eine Nadelspule oder eine Fischformspule verwendet. Eine Nadelspule hat die Form eines aus zwei Halbkreisbögen und zwei Geradenstücken zusammengesetzten Ovals, welches auch Langloch genannt wird. Eine Fischformspule hat die Form eines bevorzugt gleichschenkligen und symmetrischen Trapezes, wobei die Nutseiten die parallelen Grundseiten des Trapezes bilden. Derartige flache Rohspulen lassen sich kostengünstig fertigen und sind einfach weiter zu verarbeiten.

Vorteilhaft wird die Formspule für eine Zweischichtwicklung verwendet. Bei einer Zweischichtwicklung befinden sich, im Gegensatz zu einer Einschichtwicklung, zwei Schenkel von zwei verschiedenen Spulen übereinander in einer Nut. Eine Zweischichtwicklung ist vorteilhaft, da durch sie, im Vergleich zu einer Einschichtwicklung, ein höherer Wicklungsfaktor, geringere Wicklungsverluste und ein kleinerer Oberwellengehalt erreicht werden.

In einer bevorzugten Ausführungsform sind die Führungselemente translatorisch und rotatorisch bewegbar. Translatorisch bewegbar bedeutet hierbei, dass die Führungselemente geradlinig fortschreitend bewegt werden können. Rotatorisch bewegbar bedeutet hierbei, dass die Führungselemente drehend fortschreitend bewegt werden können. Durch die translatorische und rotatorische Bewegbarkeit können die die Führungselemente in alle Raumrichtungen bewegt und gedreht werden, wodurch die Stirnseiten der Formspule die erforderliche Form sehr genau annehmen können.

Bei einer weiteren vorteilhaften Ausgestaltung werden zumindest die Führungselemente der Spulenformmaschine von einem Computersystem gesteuert. Dies ermöglicht eine sehr exakte und reproduzierbare automatisierte Fertigung.

Bevorzugt verwendet das Computersystem CAD-Daten zur Steuerung. Computer-Aided Design, kurz CAD, bedeutet rechnerunterstütztes Konstruieren. Mit Hilfe von CAD wird am Computer beispielsweise ein virtuelles, bevorzugt dreidimensionales, Modell der zu fertigenden Spule erzeugt, welches möglichst ohne manuelle Umwege, wie beispielsweise Zeichnungen, bevorzugt direkt nach den Vorgaben des Modells gefertigt wird.

In einer bevorzugten Ausführungsform sind die Nasenhalter der Spulenformmaschine in axiale Richtung passiv nachführbar und drehbar. Dadurch wird gewährleistet, dass sich die Spule nicht ungleichmäßig und unkontrolliert verbiegt sondern die erforderliche Form erreicht wird. Durch die Drehbarkeit der Nasenhalter wird eine weitere Verarbeitung, beispielsweise das Kröpfen der Spulenenden, ermöglicht.

Bevorzugt weist die Spulenformmaschine ein Computersystem und eine Schnittstelle zum Computersystem auf, wobei das Computersystem Mittel zur Speicherung eines Computerprogramms zur Steuerung der Nasenhalter, der Radiusstücke und/oder der Führungselemente aufweist. Die computerunterstütze Steuerung ermöglicht eine sehr exakte und reproduzierbare automatisierte Fertigung der Formspule.

In einer bevorzugten Ausführungsform weist das Computersystem Mittel zur Speicherung von CAD-Daten auf, welche zur Steuerung der Nasenhalter, Radiusstücke und/oder Führungselemente vorgesehen sind. Durch die im Speicher hinterlegten Daten, welche beispielsweise ein dreidimensionales Modell der zu fertigenden Formspule enthalten, kann die Formspule, bevorzugt direkt, reproduzierbar und automatisiert gefertigt werden.

Im Folgenden wird die Erfindung anhand der in den Figuren dargestellten Ausführungsbeispiele näher beschrieben und erläutert.

Es zeigen:
- FIG 1: eine dreidimensionale Darstellung eines Ständerwicklungssystems,
- FIG 2: einen Querschnitt des Ständerwicklungssystems,
- FIG 3: eine dreidimensionale Darstellung einer Formspule eines Ständerwicklungssystems,
- FIG 4: einen Spulenquerschnitt im Bereich der Nutseite,
- FIG 5: einen Spulenquerschnitt im Bereich der Stirnseite,
- FIG 6: eine dreidimensionale Darstellung einer Rohspule,
- FIG 7: eine in einer Spulenformmaschine fixierte Rohspule,
- FIG 8: ein Fertigungsverfahren einer Formspule,
- FIG 9: eine Rohspule, welche als Nadelspule ausgeführt ist,
- FIG 10: eine Rohspule, welche als Sechskantspule ausgeführt ist,
- FIG 11: eine Rohspule, welche als Fischformspule ausgeführt ist,
- FIG 12: eine erste Ausführungsform eines Führungselements,
- FIG 13: eine zweite Ausführungsform eines Führungselements,
- FIG 14: eine Spulenformmaschine mit einer parallelen Ansteuerung,
- FIG 15: eine Spulenformmaschine mit einer Ansteuerung über ein Bussystem und
- FIG 16: einen Ausschnitt einer elektrischen rotierenden Maschine.

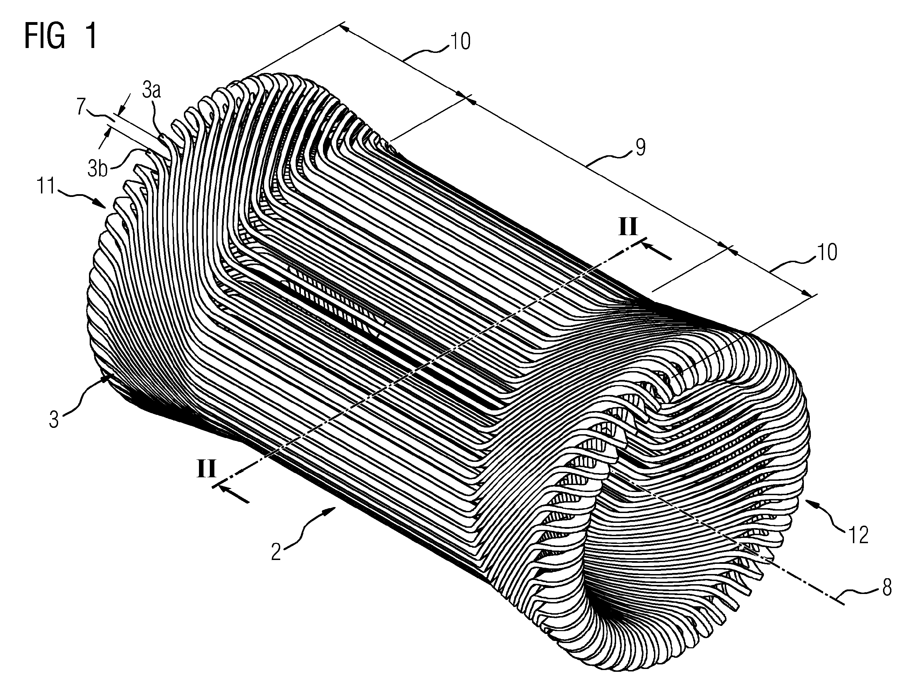

FIG 1 zeigt eine dreidimensionale Darstellung eines Ständerwicklungssystems 2 einer elektrischen rotierenden Maschine 1, wobei die elektrische rotierende Maschine 1, insbesondere die Beschaltung der Formspulen 3 und das Ständerblechpaket, aus Gründen der Übersicht nicht dargestellt sind. Die einzelnen Formspulen 3 des Ständerwicklungssystems 2 sind rotationssymmetrisch um die Rotationsache 8 angeordnet, wobei die Rotationsachse 8 eine axiale Richtung, eine radiale Richtung und eine Umfangsrichtung definiert. Das Ständerwicklungssystem 2 weist eine Schaltseite 11 und eine Nicht-Schaltseite 12 auf, wobei sich die Beschaltung der Formspulen 3, beispielsweise die elektrischen Kontakte, auf der Schaltseite 11 befinden.

Wie im Bereich der elektrischen Großmaschinen üblich ist das Ständerwicklungssystem 2 als gesehnte Zweischichtwicklungen mit Formspulen 3 ausgeführt. Unter elektrischen Großmaschinen versteht man in diesem Zusammenhang beispielsweise große Motoren und Generatoren mit einer Leistung von mindestens zehn Megawatt. Bei der gesehnten Zweischichtwicklung befinden sich zwei Schenkel von zwei verschiedenen Formspulen 3 übereinander in einer Nut, wobei der Schenkel der oberen Formspule 3 Oberschicht und der Schenkel der unteren Formspule 3 Unterschicht genannt wird. Aus Gründen der Übersicht sind die Nuten nicht dargestellt.

Die Formspulen 3 gesehnter Zweischichtwicklungen werden bevorzugt so ausgelegt, dass möglichst kurze elektrische Leiterlängen erzielt werden und die minimalen erlaubten Stirnseitenabstände 7 zwischen benachbarten Formspulen 3a, 3b eingehalten werden. Durch eine kürzere Leiterlänge entstehen weniger Verluste in den Spulen. Der geforderte minimale Stirnseitenabstand 7 ist von der maximal auftretenden Potentialdifferenz zwischen den benachbarten Formspulen 3a, 3b abhängt, um ein Überkoppeln zu vermeiden.

Die Leiterlänge einer Formspulen 3a, 3b ist abhängig von der Blechpaketlänge 9, wobei sich die Formspulen 3 auf der gesamten Blechpaketlänge 9 in Nuten befinden, und der Wickelkopfausladung 10, also die axiale Länge des Teils der Formspule 3, welcher sich nicht in den Nuten des Blechpaktes befindet. Je größer der erforderliche Stirnseitenabstand 7 ist, desto größer ist die Wickelkopfausladung 10. Toleranzen in der Geometrie der Formspulen 3 machen einen größeren Stirnseitenabstand 7 erforderlich, sodass sich die Wickelkopfausladung 10 vergrößert und damit die axiale Länge der Formspule 3 für das Ständerwicklungssystem 2 steigt.

Um die geforderten Stirnseitenabstände 7 zu erreichen, müssen die Formspulen 3 nach der Fertigung, dem sogenannten Spulenziehen, manuell nachbearbeitet werden. Dazu werden alle Formspulen des Ständerwicklungssystems in die Nuten des Blechpakets eingelegt, wobei im eingelegten Zustand die Stirnseiten per Handarbeit zurechtgebogen werden. Dieses Nachbearbeitungsverfahren ist teuer und zeitaufwendig.

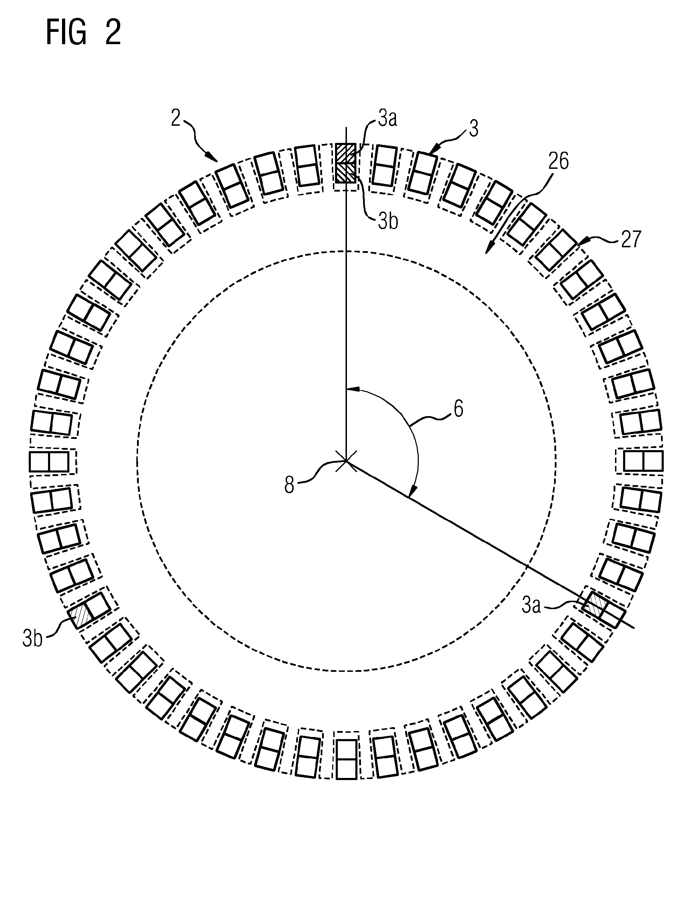

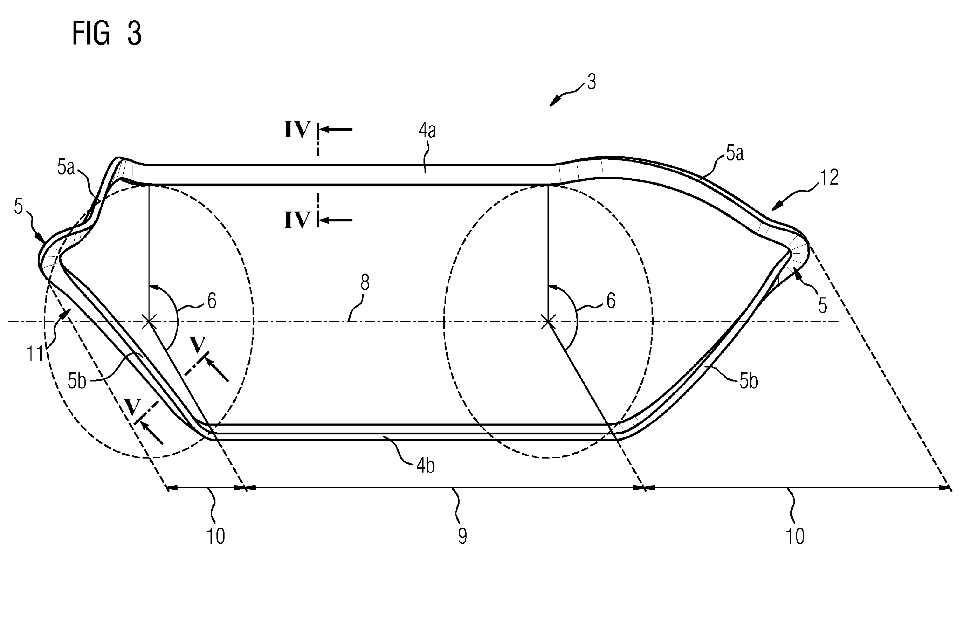

FIG 2 zeigt einen Querschnitt des Ständerwicklungssystems 2 aus FIG 1 auf Höhe des Blechpakets. Das Statorblechpaket 26 mit den Nuten 27, in denen die Formspulen 3 des Ständerwicklungssystems 2 eingelegt werden, ist aus Gründen der Übersichtlichkeit gestrichelt angedeutet. Die Formspulen 3 sind symmetrisch um die Rotationsachse 8 in Form einer Zweischichtwicklung angeordnet, wobei sich zwei verschiedene Spulenschenkel zweier Formspulen 3a, 3b übereinander in einer Nut 7 befinden. Der Schenkel der in einer Nut 27 oben befindlichen ersten Formspule 3a wird Oberschicht genannt, während der Schenkel der unteren zweiten Formspule 3b Unterschicht genannt wird. Die Unterschicht der ersten Formspule 3a befindet sich, exemplarisch im Uhrzeigersinn, einen Schrittwinkel 6 weiter unten in einer Nut 27. Exemplarisch weist das in FIG 2 dargestellte Statorblechpaket 26 48 Nuten 27 auf, wobei sich zwischen der Oberschicht und der Unterschicht weitere 15 Nuten 27 befinden. Daher beträgt der Schrittwinkel 6 120°. FIG 3 zeigt eine dreidimensionale Darstellung einer Formspule 3 eines Ständerwicklungssystems 2. Die Schaltenden sind aus Gründen der Übersicht nicht dargestellt. Die Formspule 3 weist eine erste Nutseite 4a und eine zweite Nutseite 4b auf. Bei Verwendung in einer gesehnten Zweischichtwicklung werden beispielsweise die erste Nutseite 4a Oberschicht und die zweite Nutseite 4b Unterschicht genannt. Die Nutseiten 4a, 4b verlaufen bei einer Maschine ohne Ständer-Nutschrägung in axiale Richtung parallel zur Rotationsachse 8 und erstrecken sich über die komplette Blechpaketlänge 9. Bei Nutgeschrägten Maschinen ist der Nutausgang auf der einen Seite um einen Winkel gegenüber dem Nutausgang auf der gegenüberliegenden Seite verdreht. Dieser Winkelversatz kann beispielsweise eine Nutteilung betragen. Der Abstand zwischen den Nutseiten 4a, 4b wird auch als Spulenweite bezeichnet. Die Nutseiten 4a, 4b weisen eine Winkelstellung zueinander auf, die der Nutlage, das heißt der Position der Nutseiten 4a, 4b in den Nuten 7, entspricht. Der Winkel, der sich aus der Nutlage ergibt, ist der Schrittwinkel 6. Zwischen der ersten Nutseite 4a und der zweiten Nutseite 4b befinden sich weitere Nuten 7, in die weitere Formspulen 3 eingelegt werden. Diese sind aus Gründen der Übersichtlichkeit in FIG 3 nicht dargestellt. Die Stirnseiten 5 der Formspule 3 weisen einen verdrehten Leiter auf, welcher eine Sehne zwischen der ersten Nutseite 4a und der zweiten Nutseite 4b bildet. Die Stirnseiten 5 werden auch Schenkel genannt. Die in FIG 3 dargestellte Formspule 3 ist als geschlossene Ständerformspule, oder auch Ganzformspule genannt, ausgeführt und kann im Gegensatz zu einer offenen Formspule auch mehr als eine Windung aufweisen. Die Stirnseiten 5 sind derartig geformt, dass die Wickelkopfausladung 10, also die axiale Länge der Stirnseiten möglichst kurz ist, sodass die axiale Länge der elektrischen rotierenden Maschine möglichst kurz ist. Die Stirnseiten 5 der Formspulen 3 eines Ständerwicklungssystems 2 bilden die Wickelköpfe. Die Stirnseiten 5 sind jeweils in eine erste Stirnseite 5a und eine zweite Stirnseite 5b aufgeteilt, wobei die erste Stirnseite 5a von der Mitte der Stirnseite 5 bis zur ersten Nutseite 4a verläuft und die zweite Stirnseite 5b von der Mitte der Stirnseite 5 bis zur zweiten Nutseite 4b verläuft.

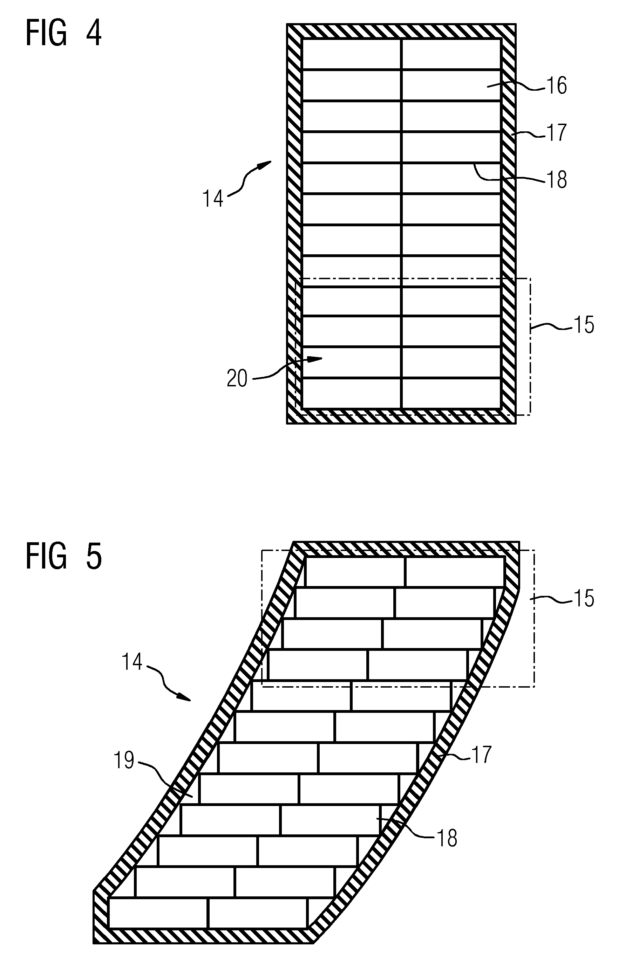

FIG 4 zeigt einen Spulenquerschnitt 14 im Bereich der Nutseite 4. Der Spulenquerschnitt 14 weist mehrere Windungen 20 mit zueinander isolierten Leitern 15 auf, welche wiederum aus mehreren zueinander isolierten, bevorzugt abgerundeten, Teilleitern 16 bestehen. Zwischen den Teilleitern 16 befindet sich eine Teilleiterisolierung 18. Aufgrund von Stromverdrängungseffekten und dem Skineffekt werden die Teilleiter 16 zueinander isoliert. Um die Windungen 20 der Formspule 3 herum wird, bevorzugt nach dem Ausformen der Formspule 3, eine Hauptisolierung 17 gewickelt, welche in Harz getränkt wird. Die Teilleiter 16 bestehen bevorzugt aus Kupfer, wobei Kupfer eine hohe elektrische und thermische Leitfähigkeit aufweist. Alternativ können die Teilleiter 16 aus einem anderen Metall mit einer elektrischen Leitfähigkeit von mehr als 3,0·10⁷ S/m bestehen. Die Teilleiter 16 werden bevorzugt an einem Stück gewickelt.

FIG 5 zeigt einen Spulenquerschnitt 14 im Bereich der Stirnseite 5. Während die Leiter 15 der Formspule 3 auf den Nutseiten 4a, 4b gerade sind und parallel zur Rotationsachse 8 verlaufen, so sind die Leiter 15 an den Stirnseiten 5, wie in FIG 3 zu sehen, gekrümmt und verdreht. Daher verschieben sich die Leiter 15 und die Teilleiter 16 zueinander, sodass es innerhalb des Spulenquerschnitts 14 unterhalb der Hauptisolierung 17 zu einer Treppenbildung der Teilleiter 16 kommt. Dies führt zu Lufteinschlüssen 19 zwischen der in Harz getränkten Hauptisolierung 17 und den Teilleitern 16. Weiterhin verkleinert sich der Stirnseitenabstand 7 durch die Treppenbildung.

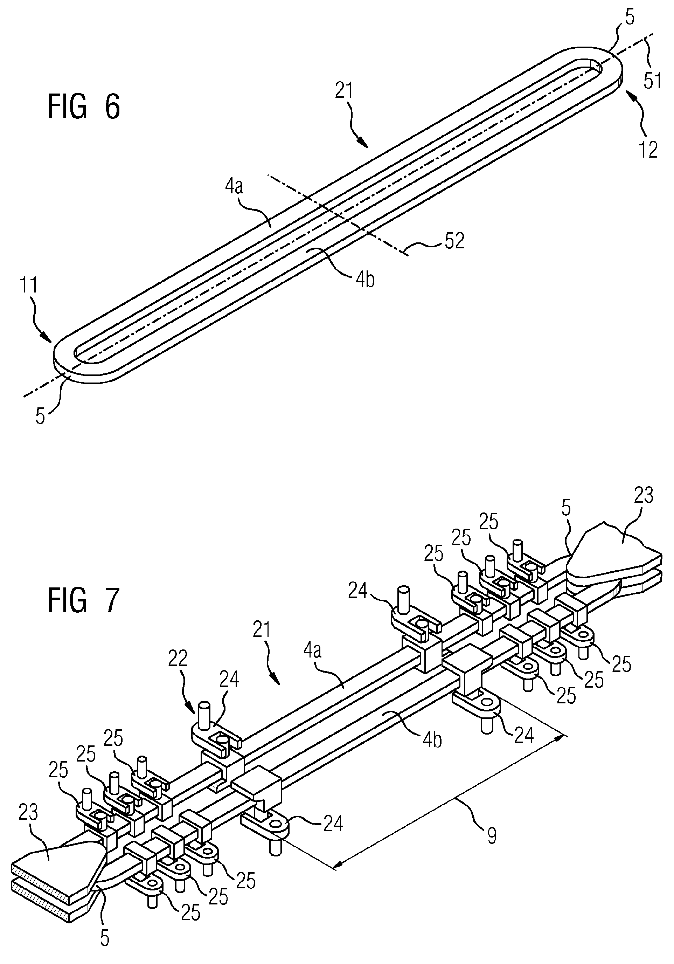

FIG 6 zeigt eine dreidimensionale Darstellung einer Rohspule 21, welche exemplarisch als Nadelspule ausgeführt ist. Die Schaltenden sind aus Gründen der Übersicht nicht dargestellt. Die Rohspule 21 ist ohne ihre Schaltenden achsensymmetrisch bezüglich einer in Längsrichtung verlaufenden Symmetrieachse 51 und einer in Querrichtung verlaufenden Symmetrieachse 52.

Sie weist eine erste Nutseite 4a und eine zweite Nutseite 4b sowie eine Stirnseite 5 auf der Schaltseite 11 und eine Stirnseite 5 auf der Nicht-Schaltseite 12 auf, wobei die in Längsrichtung verlaufende Symmetrieachse 51 durch die Mitte der beiden Stirnseiten 5 verläuft. Die Form der Rohspule 21 entspricht zumindest näherungsweise der eines aus zwei Halbkreisbögen und zwei Geradenstücken zusammengesetzten Ovals. Der Spulenquerschnitt 14 der Rohspule 21 entspricht dem in FIG 4 gezeigten.

FIG 7 zeigt eine in einer Spulenformmaschine 22 fixierte Rohspule 21. Aus Gründen der Übersicht sind von der Spulenformmaschine 22 nur die Nasenhalter 23, die Radiusstücke 24 und die Führungselemente 25 dargestellt. Die in FIG 7 gezeigte Fixierung der Rohspule 21 entspricht dem ersten Fertigungsschritt. Die Stirnseiten 5 auf der Schaltseite 11 und auf der Nicht-Schaltseite 12 werden jeweils von einem Nasenhalter 23 zumindest näherungsweise in der Mitte der Halbkreisbögen mechanisch fixiert, wobei die Nasenhalter 23 zumindest an zwei Seiten kraftschlüssig und/oder formschlüssig mit der Rohspule 21 mechanisch verbunden werden. Es kann die Rohspule 21 auch auf jeder Seite von mehr als einem Nasenhalter 23 mechanisch fixiert werden. Die Nasenhalter 23 sind zumindest in axiale Richtung bewegbar und um ihre axiale Bewegungsrichtung drehbar. Die Nutseiten 4a, 4b werden über die der gesamte Blechpaketlänge 9 auf jeder Seite von mindestens zwei, bevorzugt identischen, Radiusstücken 24 mechanisch gehalten. Die Bereiche der Stirnseiten 5 der Rohspule 21 zwischen den Nasenhaltern 23 und den Radiusstücken 24 werden von Führungselementen 25 gehalten, wobei sich jeweils zwischen einem Nasenhalter 23 und einem Radiusstück 24 exemplarisch drei, bevorzugt identische, Führungselemente 25 befinden. Die Führungselemente 25 sind alle, unabhängig voneinander, in alle Raumrichtungen bewegbar und drehbar ausgeführt.

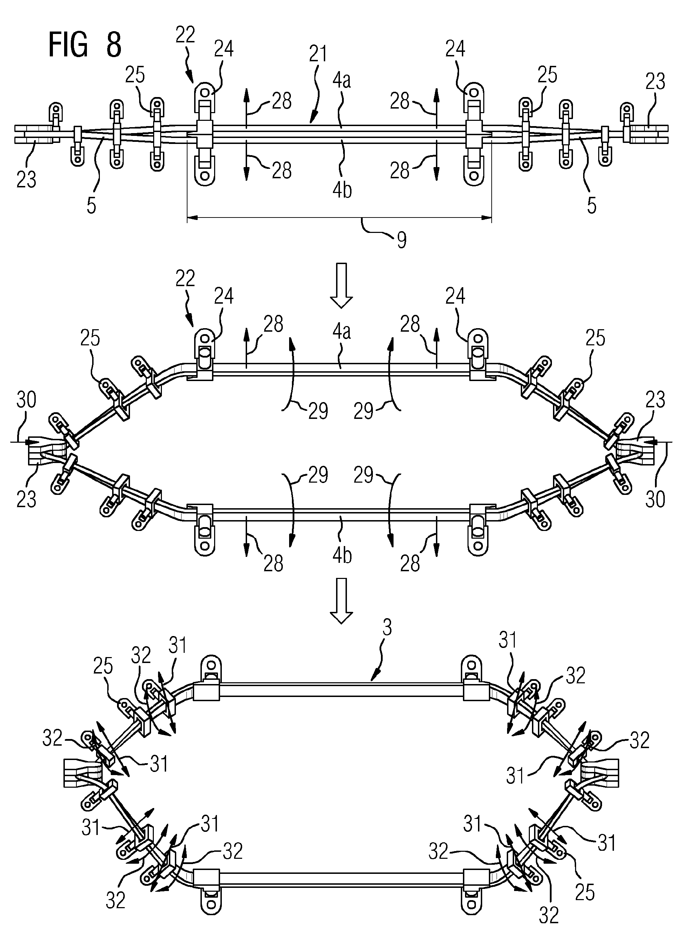

FIG 8 zeigt ein Fertigungsverfahren einer Formspule 3. Die Rohspule 21 wird in einem ersten Schritt, wie in FIG 7 dargestellt, in der Spulenformmaschine 22 fixiert. Daraufhin werden die beiden Nutseiten 4a, 4b der flachen Rohspule 21, wie im oberen Bild der FIG 8 zu sehen, in einem weiteren Schritt von den Radiusstücken 24 quer zu ihrer ursprünglichen Wickelebene auf die Spulenweite der Formspule 3 in jeweils entgegengesetzte Richtungen ausgezogen. Bei dieser Spreizung 28 bewegen sich die Radiusstücke 24 an der ersten Nutseite 4a und die Radiusstücke 24 an der zweiten Nutseite 4b jeweils synchron in dieselbe Richtung, sodass die Nutseiten 4a, 4b auch nach der Spreizung 28 parallel zueinander in axiale Richtung verlaufen. Hierbei bewegen sich die Nasenhalter 23 in axiale Richtung aufeinander zu, um zu gewährleisten dass sich die Spule nicht ungleichmäßig und unkontrolliert verbiegt. Die Nasenhalter 23 werden in axiale Richtung bevorzugt passiv nachgeführt. Die erforderliche Spulenweite ist unter anderem abhängig vom Schrittwinkel 6. Bei nutgeschrägtem Ständer bewegen sich die Radiusstücke 24 bevorzugt asynchron.

Weiterhin werden die Nutseiten 4a, 4b, wie im mittleren Bild der FIG 8 zu sehen, nach oder während der Spreizung 28 zueinander derartig verdreht, dass die der späteren Nutlage entsprechende Winkelstellung der Nutseiten 4a, 4b zueinander hergestellt wird. Die Nutseiten 4a, 4b sind hierbei um einen Schrittwinkel 6 zueinander verdreht. Das Spreizen 28 wird entweder in mehreren Teilschritten oder in einem kontinuierlichen Formvorgang durchgeführt und geschieht gleichzeitig mit oder vor dem Verdrehen 29 der Nutseiten 4a, 4b zueinander bis die endgültige Spulenweite und der erforderliche Schrittwinkel 6 erreicht sind.

In einem darauf folgenden Schritt, welcher im unteren Bild der FIG 8 zu sehen ist, werden die Stirnseiten 5 der entstandenen Formspule 3 durch die Führungselemente 25 auf einem vorgegebenen Weg in eine definierte Endposition gebogen. Ausgehend von der Schleifenform werden die Führungselemente 25 in die endgültige Position manövriert und erzeugen damit die gewünschte Spulenform durch Biegung. Jedes Führungselement 25 ist durch die Spulenformmaschine 22 in alle Raumrichtungen translatorisch und rotatorisch bewegbar. Je mehr Führungselemente 25 verwendet werden, desto präziser kann die gewünschte Spulenform abgebildet werden. Eine derartige geführt Formung der Stirnseiten 5 wird als aktive Stirnseitenführung bezeichnet. Die aktive Stirnseitenführung führt dazu, dass bei minimaler Leiterlänge maximale Stirnseitenabstände 7 erreicht werden können, was die manuelle Nacharbeitung der Formspulen 3 reduziert oder gar überflüssig macht.

Weiterhin sind die Führungselemente 25 an drei Seiten oder an allen vier Seiten kraftschlüssig und/oder formschlüssig mit der Formspule 3 verbunden. Somit können sich die Leiter 15 und Teilleiter 16 während des Biegevorgangs nicht oder zumindest schlechter zueinander bewegen. Dadurch wird eine Treppenbildung vermieden und die Rechteckform des Spulenquerschnitts 14 wird auch im Bereich der gebogenen Stirnseiten 5 erhalten.

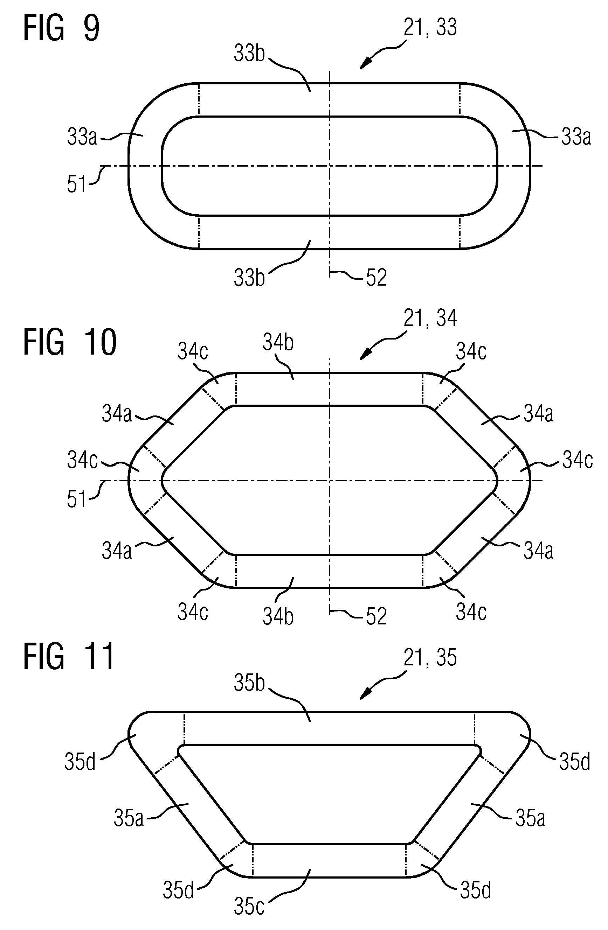

FIG 9 zeigt eine Rohspule 21, welche als Nadelspule 33 ausgeführt ist. Die Nadelspule 33 ist symmetrisch bezüglich einer in Längsrichtung verlaufenden Symmetrieachse 51 und einer in Querrichtung verlaufenden Symmetrieachse 52. Sie hat die Form eines aus zwei gegenüberliegenden Halbkreisbögen 33a und zwei parallelen Geradenstücken 33b zusammengesetzten Ovals. Die Halbkreisbögen können jeweils anstelle der Halbkreisbögen zwei Viertelkreisbögen und ein dazwischen liegendes kurzes Geradenstück aufweisen, wobei die kurzen Geradenstücke parallel zueinander angeordnet sind. Eine Nadelspule 33 ist eine symmetrische Flachspule und wird bevorzugt mit Leitern 15 beziehungsweise Teilleitern 16 aus einem Stück gewickelt.

FIG 10 zeigt eine Rohspule 21, welche als Sechskantspule 34 ausgeführt ist. Eine Sechskantspule 34 wird auch Ovalspule genannt und ist, genau wie die in FIG 9 gezeigte Nadelspule 33, ist symmetrisch bezüglich einer in Längsrichtung verlaufenden Symmetrieachse 51 und einer in Querrichtung verlaufenden Symmetrieachse 52. Anstatt der in FIG 9 dargestellten Halbkreisbögen 33a weist die Form der Sechskantspule 34 an jeder Seide zwei Geradenstücke 34b auf, welche symmetrisch zur in Längsrichtung verlaufenden Symmetrieachse 51 verlaufen Die Form weist zwischen den parallelen Geradenstücken 34b und den kurzen Geradenstücken 34a bevorzugt abgerundete Verbindungsstücke 34c auf. Eine Sechskantspule 34 ist, wie eine Nadelspule 33, eine symmetrische Flachspule und wird bevorzugt mit Leitern 15 beziehungsweise Teilleitern 16 aus einem Stück gewickelt.

FIG 11 zeigt eine Rohspule 21, welche als Fischformspule 35 ausgeführt ist. Eine Fischformspule 35 hat die Form eines bevorzugt gleichschenkligen und symmetrischen Trapezes, wobei die parallelen Grundseiten 35b, 35c dafür vorgesehen sind, in die Nuten 27 eingelegt zu werden. Die Form der Fischformspule 35 weist weiterhin zwei bevorzugt gleich lange Trapezschenkel 35a und dazwischen bevorzugt abgerundete Verbindungsstücke 35d auf. Die Fischformspule 35 ist, im Gegensatz zur Nadelspule 33 und Sechskantspule 34, eine asymmetrische Flachspule und wird ebenfalls bevorzugt mit Leitern 15 beziehungsweise Teilleitern 16 aus einem Stück gewickelt.

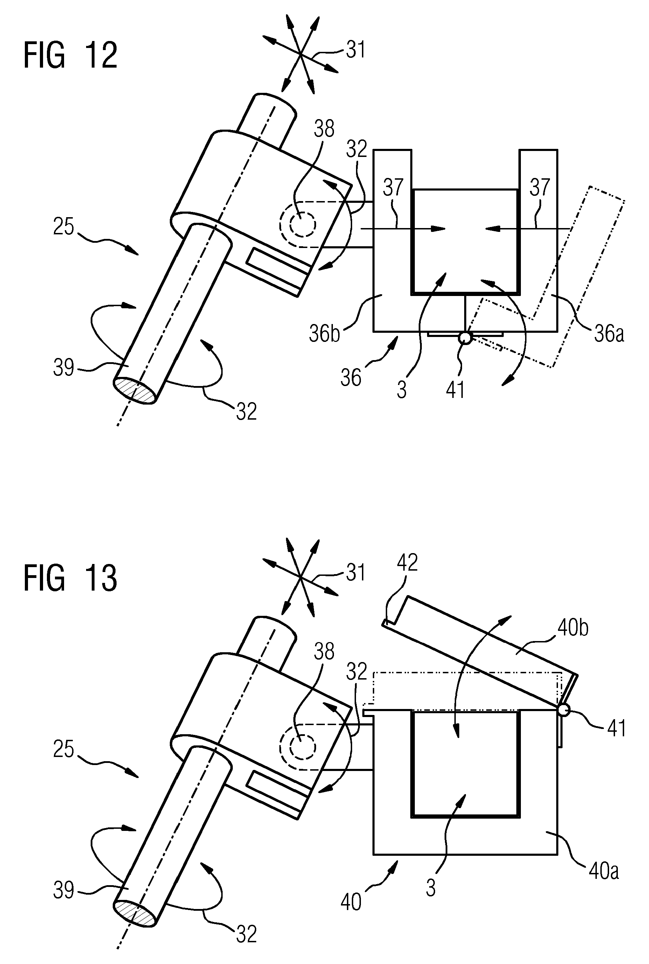

FIG 12 zeigt eine erste Ausführungsform eines Führungselements 25. Das Führungselement 25 weist einen Arm 39 und eine über ein Gelenk 38 mit dem Arm 39 verbundene dreiseitige Spulenaufnahme 36 auf. Der Arm 39 kann die Spulenaufnahme 36 durch translatorische Bewegungen 31 und rotatorische Bewegungen 32 frei im Raum bewegen. Das Gelenk 38 ermöglicht zusätzlich eine rotatorische Bewegung 32 der dreiseitigen Spulenaufnahme 36 bezüglich des Armes 39. Die näherungsweise U-förmige dreiseitige Spulenaufnahme 36 weist ein erstes Seitenteil 36a und ein zweites Seitenteil 36b auf, welche über ein Scharnier 41 verbunden sind. Wird die Formspule 3 in die dreiseitige Spulenaufnahme 36 eingespannt, ist die Formspule 3 in drei Richtungen formschlüssig mit der dreiseitigen Spulenaufnahme 36 verbunden. Weiterhin drücken die beiden Seitenteile 36a, 36b mit einer Kraft 37 von zwei gegenüberliegenden Seiten gegen die Formspule 3, sodass durch die Reibung eine kraftschlüssige Verbindung zwischen den Seitenteilen 36a, 36b der dreiseitigen Spulenaufnahme 36 und der Formspule 3 entsteht und die Formspule 3 nicht mehr in die verbleibende vierte Richtung aus der dreiseitigen Spulenaufnahme 36 bewegt werden kann. Die beiden Seitenteile 36a, 36b der dreiseitigen Spulenaufnahme 36 bestehen bevorzugt aus einem Metall, beispielsweise Stahl, oder einem anderen harten Material. Die Innenseiten der dreiseitigen Spulenaufnahme 36 können optional mit einer Schicht aus Kunststoff, Gummi oder einem anderen, bevorzugt elastischen, Material beschichtet sein, um beispielsweise die Oberfläche der Formspule 3 nicht zu beschädigen.

FIG 13 zeigt eine zweite Ausführungsform eines Führungselements 25. Die Ausgestaltung des Armes 39 und des Gelenks 38 entspricht der aus FIG 12. Über das Gelenk 38 ist eine vierseitige Spulenaufnahme 40 mit dem Arm 39 verbunden. Die im geschlossenen Zustand rechteckförmige vierseitige Spulenaufnahme 40 weist ein U-förmiges Unterteil 40a und ein gerades Oberteil 40b auf, welches an einer Seite über ein Scharnier 41 mit dem Unterteil 40a verbunden ist. Durch das Scharnier 41 lässt sich das Oberteil 40b aufklappen, um die Formspule 3 in die vierseitige Spulenaufnahme 40 einzulegen. Wird nach dem Einlegen der Formspule 3 die vierseitige Spulenaufnahme 40 mit einer Verschlussvorrichtung 42 verschlossen, so entsteht eine vierseitige formschlüssige Verbindung zwischen vierseitigen Spulenaufnahme 40 und der Formspule 3 und die Formspule 3 kann in keine Richtung mehr aus der dreiseitigen Spulenaufnahme 36 bewegt werden. Das Unterteil 40a und das Oberteil 40b der vierseitigen Spulenaufnahme 40 bestehen bevorzugt aus einem Metall, beispielsweise Stahl, oder einem anderen harten Material. Die Innenseiten der vierseitigen Spulenaufnahme 40 können ebenfalls optional mit einer Schicht aus Kunststoff, Gummi oder einem anderen, bevorzugt elastischen, Material beschichtet sein, um beispielsweise die Oberfläche der Formspule 3 nicht zu beschädigen. Die vierseitige Spulenaufnahme 40 kann auch rautenförmig oder rund ausgeführt sein.

Eine weitere Möglichkeit wäre es das Führungselement 25 mit einer schiebbaren Verschlussvorrichtung 42, ähnlich wie bei einer Schiebetür, zu öffnen und zu verschließen.

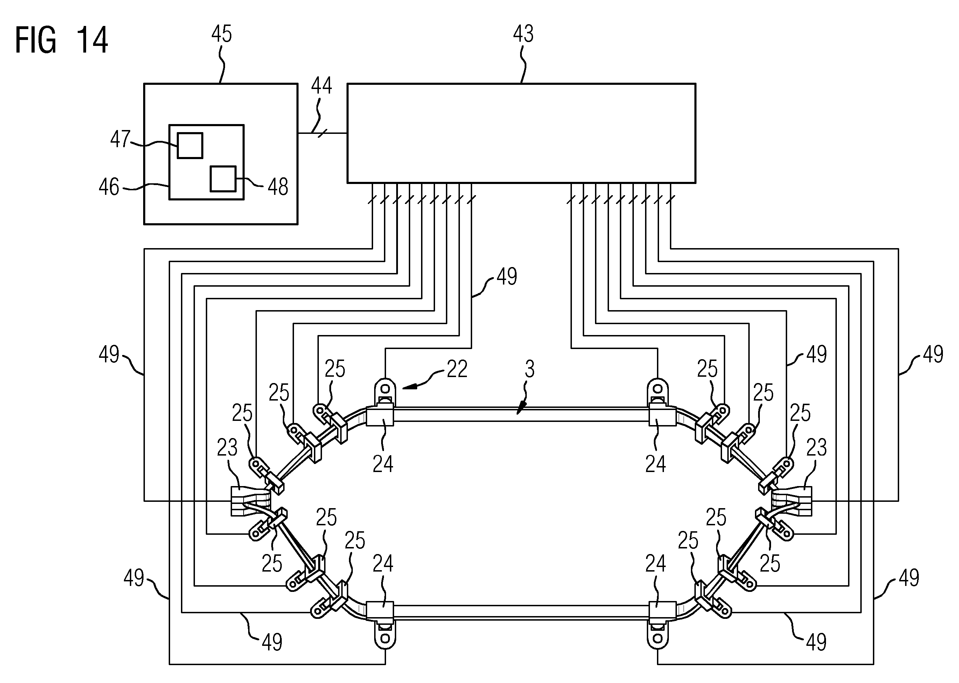

FIG 14 zeigt eine Spulenformmaschine 22 mit einer parallelen Ansteuerung. Die Spulenformmaschine 22 weist Nasenhalter 23, Radiusstücke 24 und Führungselemente 25 auf, welche eine Formspule 3, wie in FIG 8 gezeigt, fixieren. Weiterhin weist die Spulenformmaschine 22 eine Ansteuervorrichtung 43 und ein Computersystem 45 auf. Die Ansteuervorrichtung 43 und das Computersystem 45 sind über eine Schnittstelle 44 miteinander verbunden. Das Computersystem 45 weist einen Speicher 46 auf, auf welchem sich CAD-Daten 48 und ein Computerprogramm 47 zur automatisierten Ansteuerung der Nasenhalter 23, Radiusstücke 24 und Führungselemente 25 mit Hilfe der CAD-Daten 48 befinden. Aus der aktuellen Position der Nasenhalter 23, Radiusstücke 24 und Führungselemente 25, in die die Formspule 3 eingespannt ist, und den CAD-Daten 48 errechnet das Computerprogramm 47 die Bewegungen der Nasenhalter 23, Radiusstücke 24 und Führungselemente 25, um die Formspule 3 entsprechend der Vorgabe aus den CAD-Daten 48 präzise und automatisiert zu fertigen. Die Daten zur Ansteuerung werden über die Schnittstelle 44 an die Ansteuervorrichtung 43 übertragen. Die Ansteuervorrichtung 43 steuert die Nasenhalter 23, Radiusstücke 24 und Führungselemente 25 über parallele Datenleitungen 49 an.

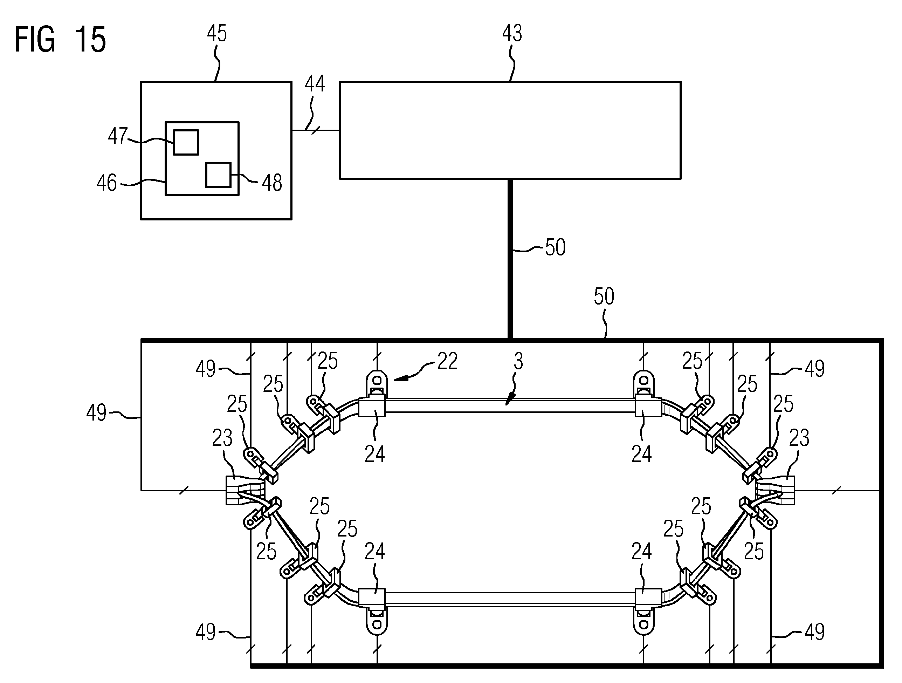

FIG 15 zeigt eine Spulenformmaschine 22 mit einer Ansteuerung über ein Bussystem 50. Die Ausführung der Spulenformmaschine 22 entspricht im Wesentlichen der aus FIG 14. Anstelle der parallelen Datenleitungen 49 kommt ein Bussystem 50 zum Einsatz mit welchem die Daten über einen gemeinsamen Datenbus übertragen werden. Die Nasenhalter 23, Radiusstücke 24 und Führungselemente 25 werden über Datenleitungen 49 vom Bussystem 50 angesteuert.

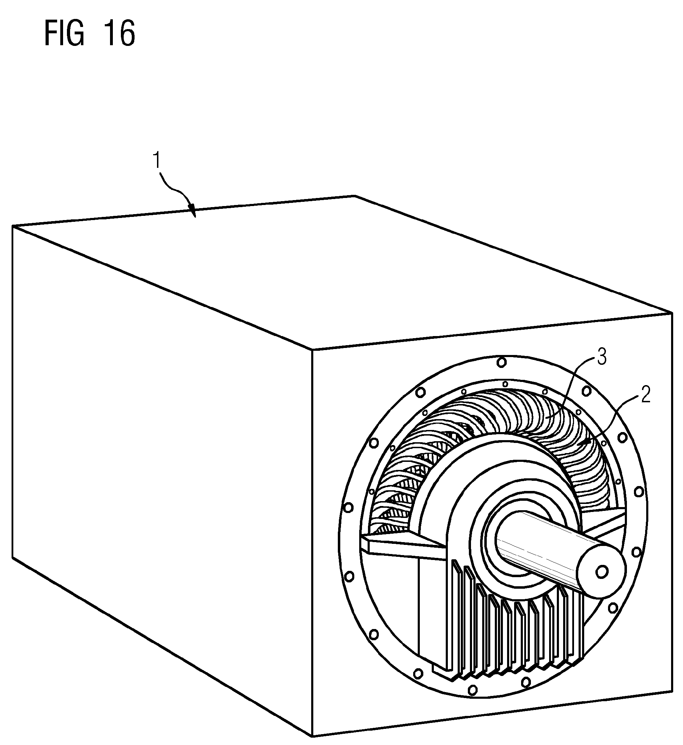

FIG 16 zeigt einen Ausschnitt einer elektrischen rotierenden Maschine 1. Bei der elektrischen rotierenden Maschine 1 handelt es sich um eine Großmaschine, insbesondere einen großen Motor mit einer Leistung im Megawatt-Bereich. Die elektrische rotierende Maschine weist ein Ständerwicklungssystem 2 auf, wobei das Ständerwicklungssystem 2 als gesehnte Zweischichtwicklungen mit Formspulen 3 ausgeführt ist. Die Formspulen 3 des Ständerwicklungssystems 2 werden mit einem in FIG 8 gezeigten Fertigungsverfahren mit einer Spulenformmaschine 22 wie sie in FIG 14 und in FIG 15 gezeigt ist hergestellt.

Zusammenfassend betrifft die Erfindung ein Verfahren zur Herstellung einer geschlossenen Formspule 3 für ein Ständerwicklungssystem 2 einer elektrischen rotierenden Maschine 1 aus einer Rohspule 21 mit einem rechteckigen Spulenquerschnitt 14, welche mehrere zueinander elektrisch isolierte rechteckige Teilleiter 16 aufweist, mit Hilfe einer Spulenformmaschine 22. Um eine kostengünstige und zeitsparende Fertigung mit einem hohem Automatisierungsgrad zu erreichen, wird vorgeschlagen, dass die Spulenformmaschine 22 Nasenhalter 23, Radiusstücke 24 und Führungselemente 25 aufweist, wobei die Rohspule 21 Nutseiten 4a, 4b und Stirnseiten 5 aufweist, wobei in einem ersten Schritt die Stirnseiten 5 jeweils von einem Nasenhalter 23 näherungsweise mittig gehalten werden, die Nutseiten 4a, 4b auf der gesamten Blechpaketlänge 9 jeweils von mindestens zwei Radiusstücken 24 gehalten werden und die Bereiche der Stirnseiten 5 der Rohspule 21 zwischen den Nasenhaltern 23 und den Radiusstücken 24 von Führungselementen 25 gehalten werden, wobei in einem weiteren Schritt die beiden Nutseiten 4a, 4b von den Radiusstücken 24 derartig gespreizt und zueinander verdreht werden, dass die der späteren Nutlage entsprechende Winkelstellung der Nutseiten 4a, 4b zueinander hergestellt wird und die Nutseiten 4a, 4b parallel zueinander in axiale Richtung verlaufen, wobei in einem darauf folgenden Schritt die Stirnseiten 5 durch die Führungselemente 25, welche mit der im weiteren Schritt entstandenen Formspule 3 zumindest an drei Seiten kraftschlüssig und/oder formschlüssig verbunden werden, auf einem vorgegebenen Weg in eine definierte Endposition gebogen werden.

## Patentansprüche

1. Verfahren zur Herstellung einer geschlossenen Formspule (3) für ein Ständerwicklungssystem (2) einer elektrischen rotierenden Maschine (1) aus einer Rohspule (21) mit einem rechteckigen Spulenquerschnitt (14), welche mehrere zueinander elektrisch isolierte rechteckige Teilleiter (16) aufweist, mit Hilfe einer Spulenformmaschine (22),
wobei die Spulenformmaschine (22) Nasenhalter (23), Radiusstücke (24) und Führungselemente (25) aufweist,
wobei die Rohspule (21) Nutseiten (4a, 4b) und Stirnseiten (5) aufweist,
wobei in einem ersten Schritt die Stirnseiten (5) jeweils von einem Nasenhalter (23) näherungsweise mittig gehalten werden, die Nutseiten (4a, 4b) auf der gesamten Blechpaketlänge (9) jeweils von mindestens zwei Radiusstücken (24) gehalten werden und die Bereiche der Stirnseiten (5) der Rohspule (21) zwischen den Nasenhaltern (23) und den Radiusstücken (24) von Führungselementen (25) gehalten werden,
wobei in einem weiteren Schritt die beiden Nutseiten (4a, 4b) von den Radiusstücken (24) derartig gespreizt und zueinander verdreht werden, dass die der späteren Nutlage entsprechende Winkelstellung der Nutseiten (4a, 4b) zueinander hergestellt wird und die Nutseiten (4a, 4b) parallel zueinander in axiale Richtung verlaufen,
wobei in einem darauf folgenden Schritt die Stirnseiten (5) durch die Führungselemente (25), welche mit der im weiteren Schritt entstandenen Formspule (3) zumindest an drei Seiten kraftschlüssig und/oder formschlüssig verbunden werden, auf einem vorgegebenen Weg in eine definierte Endposition gebogen werden.

2. Verfahren nach Anspruch 1,
wobei die Nasenhalter (23) im weiteren Schritt in axiale Richtung passiv nachgeführt werden.

3. Verfahren nach einem der Ansprüche 1 bis 2,
wobei als Rohspule (21) eine Nadelspule oder eine Fischformspule verwendet wird.

4. Verfahren nach einem der Ansprüche 1 oder 3,
wobei die Formspule (3) für eine Zweischichtwicklung verwendet wird.

5. Verfahren nach einem der Ansprüche 1 bis 4,
wobei die Führungselemente (25) translatorisch und rotatorisch bewegbar sind.

6. Verfahren nach einem der Ansprüche 1 bis 5,
wobei zumindest die Führungselemente (25) der Spulenformmaschine (22) von einem Computersystem gesteuert werden.

7. Verfahren nach Anspruch 6,
wobei das Computersystem CAD-Daten zur Steuerung verwendet.

8. Spulenformmaschine (22) zur Herstellung einer Formspule (3) für ein Ständerwicklungssystem (2) für eine elektrische rotierende Maschine (1) nach einem Verfahren nach einem der Ansprüche 1 bis 7,
wobei die Spulenformmaschine (22) Nasenhalter (23), Radiusstücke (24) und Führungselemente (25) aufweist,
wobei die Nasenhalter zum Fixieren der Stirnseiten (5) einer Rohspule (21) vorgesehen sind,
wobei die Radiusstücke (24) zum Fixieren der Nutseiten (4a, 4b) der Rohspule (21) vorgesehen sind,
wobei die Führungselemente (25) zum fixieren der Bereiche der Stirnseiten (5) der Rohspule (21) zwischen den Nasenhaltern (23) und den Radiusstücken (24) vorgesehen sind und wobei die Führungselemente (25) dafür vorgesehen sind, mit der Formspule (3) zumindest an drei Seiten kraftschlüssig und/oder formschlüssig verbunden werden.

9. Spulenformmaschine (22) nach Anspruch 8,
wobei die Führungselemente (25) frei im Raum sowohl translatorisch als auch rotatorisch bewegbar sind.

10. Spulenformmaschine (22) nach einem der Ansprüche 8 oder 9,
wobei die Nasenhalter (23) in axiale Richtung passiv nachführbar und drehbar sind.

11. Spulenformmaschine (22) nach einem der Ansprüche 8 bis 10,
wobei die Spulenformmaschine (22) ein Computersystem (45) und eine Schnittstelle (44) zum Computersystem (45) aufweist,
wobei das Computersystem (45) Mittel zur Speicherung eines Computerprogramms zur Steuerung der Nasenhalter (23), der Radiusstücke (24) und/oder der Führungselemente (25) aufweist.

12. Spulenformmaschine (22) nach Anspruch 11,
wobei das Computersystem (45) Mittel zur Speicherung (46) von CAD-Daten aufweist, welche zur Steuerung der Nasenhalter (23), Radiusstücke (24) und/oder Führungselemente (25) vorgesehen sind.

13. Computerprogramm zur Durchführung eines Verfahrens nach einem der Ansprüche 1 bis 7 bei Ablauf in einer Steuerung.

14. Elektrische rotierende Maschine (1) mit mindestens einer gemäß einem Verfahren nach einem der Ansprüche 1 bis 7 hergestellten geschlossenen Formspule (3).
